# EUROPÄISCHE PATENTSCHRIFT

(11) **EP 3 055 593 B1**
(45) Veröffentlichungstag und Bekanntmachung des Hinweises auf die Patenterteilung: **14.06.2017**
(21) Anmeldenummer: 14776602.6
(22) Anmeldetag: 18.09.2014
(51) Int. Cl.: F16H 63/34

(54) **PARKSPERRE FÜR KRAFTFAHRZEUGE**
PARK LOCK FOR MOTOR VEHICLES
VERROUILLAGE DE STATIONNEMENT POUR VÉHICULES AUTOMOBILES

(30) Priorität: 10.10.2013 DE 102013220396
(43) Veröffentlichungstag der Anmeldung: 17.08.2016
(73) Patentinhaber: Bayerische Motoren Werke Aktiengesellschaft, 80809 München (DE)
(72) Erfinder: HERTTER, Tobias, 81247 München (DE); HOMBAUER, Michael, 85630 Harthausen (DE); STRENG, Peter, 82275 Emmering (DE)
(86) Internationale Anmeldenummer: PCT/EP2014/069847
(87) Internationale Veröffentlichungsnummer: WO 2015/051979

(56) Entgegenhaltungen:
- EP-A1- 2 508 274
- DE-A1-102010 027 826
- DE-A1-102011 056 725
- JP-A- 2011 098 677
- JP-A- 2011 143 893
- US-A- 4 369 867
- US-A- 5 170 869
- US-A1- 2011 278 132
- US-A1- 2012 097 497

## Beschreibung

Die Erfindung betrifft eine Parksperre für Kraftfahrzeuge, insbesondere für Kraftfahrzeuge, welche ein Automatikgetriebe, ein automatisiertes Getriebe oder einen Elektroantrieb aufweisen, umfassend eine Betätigungseinrichtung mit einer Welle zur Kopplung mit einem Aktuator, wobei die Welle zwischen einer Betätigungsstellung und einer Lösestellung um eine Betätigungsachse schwenkbar ist, einem mit der Betätigungseinrichtung gekoppelte Riegeleinrichtung mit einem Riegel, der zwischen einer Verriegelungsposition und einer Entriegelungsposition um die Betätigungsachse schwenkbar ist, eine Sperrklinke, die zwischen einer Sperrstellung und einer Freigabestellung um eine Klinkenlagerachse schwenkbar ist, sowie ein Parksperren-Zahnrad, das um eine Parksperrenachse drehbar und mit einem Kraftfahrzeugrad gekoppelt ist, wobei die Sperrklinke in ihrer Sperrstellung so in das Parksperren-Zahnrad eingreift, dass eine Drehung des Parksperren-Zahnrads um die Parksperrenachse blockiert ist, und in ihrer Freigabestellung vom Parksperren-Zahnrad beabstandet ist, sodass eine Drehung des Parksperren-Zahnrads um die Parksperrenachse freigegeben ist, wobei die Welle der Betätigungseinrichtung in ihrer Betätigungsstellung den Riegel in seiner Verriegelungsposition und dieser die Sperrklinke in ihre Sperrstellung beaufschlagt, und wobei der Riegel in der Lösestellung der Welle seine Entriegelungsposition einnimmt, in welcher die Sperrklinke freigegeben ist.

Eine solche Parksperre für Kraftfahrzeuge ist bereits aus der DE 10 2010 027 826 A1 bekannt und bietet den Vorteil, dass sie aufgrund der wenigen Einzelteile und der geringen Zahl an relativ zueinander bewegten Elementen, insbesondere der Riegeleinrichtung, einen vergleichsweise geringen Fertigungsaufwand und Verschleiß aufweist. Dies ermöglicht eine lange Betriebsdauer der Parksperre bei zuverlässiger Funktion. Zudem benötigt der Riegel der Riegeleinrichtung für sich und seine Schwenkbewegung nur wenig Raum, sodass sich eine besonders kompakte Bauweise ergibt.

Als problematisch erweist sich hingegen die Montage des Aktuators an der Betätigungseinrichtung sowie die hohe Belastung des Aktuators beim Betätigen der Parksperre. Darüber hinaus kommt es im Missbrauchsfall, das heißt beim Einlegen der Parksperre während der Fahrt, zu unerwünscht starken Schwingungen im Antriebsstrang sowie zu Beschädigungen der Parksperre. Ferner hat sich herausgestellt, dass ein am Hang stehendes Fahrzeug durch die beschriebene Parksperre nicht zuverlässig am Wegrollen gehindert wird.

Weitere Parksperren für Kraftfahrzeuggetriebe sind in der DE 10 2011 056 725 A1, der US 4 369 867 A, der US 5 170 869 A, der JP 2011 143 893 A, der US 2012 / 097 497 A1, der EP 2 508 274 A1, der US 2011 / 278 132 A1 sowie der JP 2011 098 677 A, die zudem alle Merkmale des Oberbegriffs des Anspruchs 1 offenbart, beschrieben.

Aufgabe der Erfindung ist es, eine Parksperre zu schaffen, bei der einer oder mehrere der beschriebenen Nachteile aus dem Stand der Technik beseitigt sind.

Erfindungsgemäß wird diese Aufgabe gelöst durch eine Parksperre der eingangs genannten Art, bei welcher der Riegel und die Sperrklinke in der Verriegelungsposition des Riegels so zusammenwirken, dass zwischen dem Riegel und der Sperrklinke eine Selbsthemmung vorliegt.

Um in der Sperrstellung der Parksperre zuverlässig eine hohe Haltekraft zu gewährleisten, weist die Sperrklinke einen Hinterschnitt auf, in den der Riegel in seiner Verriegelungsposition eingreift. Dies führt zu der sogenannten Selbsthemmung zwischen dem Riegel und der Sperrklinke und bedeutet mit anderen Worten, dass die Parksperre, genauer die Sperrklinke der Parksperre, nur durch ein aktives Verschwenken des Riegels von der Verriegelungsposition in die Entriegelungsposition freigegeben werden kann. Durch ein auf die Sperrklinke wirkendes Drehmoment des Parksperren-Zahnrads lässt sich die Parksperre hingegen nicht freigeben, da die Sperrklinke bei einer solchen Belastung aufgrund des Hinterschnitts und der daraus resultierenden Selbsthemmung nicht in ihre Freigabestellung verschwenkt werden kann.

Die Parksperre kann zusätzlich wenigstens eines der nachfolgenden Merkmale aufweisen:
- Ein axiales Ende der Welle ist zur formschlüssigen Verbindung mit dem Aktuator als Vielzahn oder Vielkant ausgebildet;
- es ist eine Blattfeder sowie ein drehfest mit der Welle verbundenes Rastelement vorgesehen, wobei die Blattfeder und das Rastelement sowohl in der Betätigungsstellung als auch in der Lösestellung der Welle eine Rastverbindung ausbilden;
- das Parksperren-Zahnrad hat in Umfangsrichtung abwechselnd Zähne und Zahnlücken, wobei die Zähne eine satteldachförmige Kopfkontur aufweisen;
- der Riegel und/oder die Sperrklinke weisen zur Reduktion des Trägheitsmoments wenigstens eine Aussparung auf.

Diese Einzelmerkmale tragen insgesamt zu einer montagefreundlichen, leicht zu betätigenden Parksperre bei, bei der im Missbrauchsfall keine unerwünschten Schwingungen im Antriebsstrang und keine größeren Schäden auftreten.

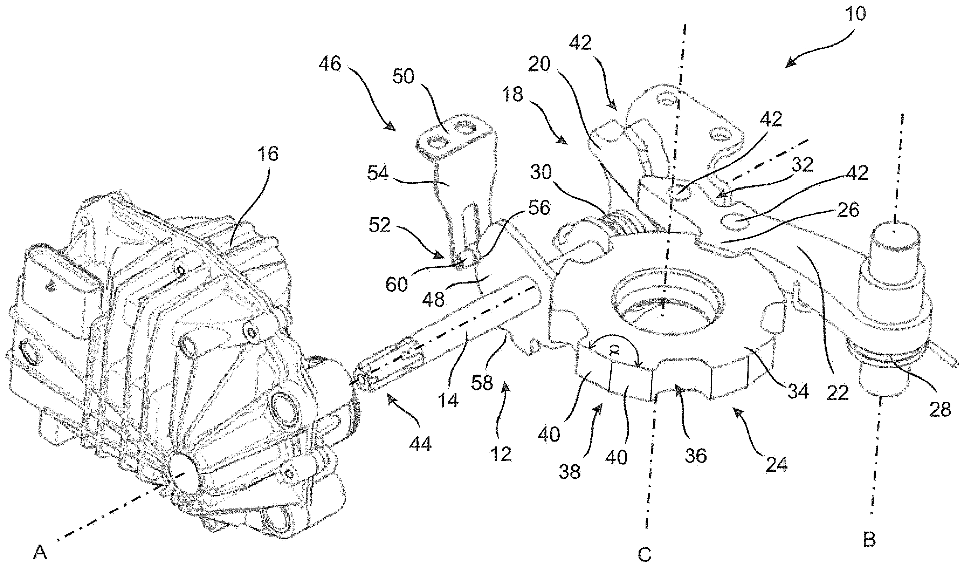

Vorteilhafte und zweckmäßige Ausgestaltungen des Erfindungsgedankens sind in den Unteransprüchen beschrieben. Weitere Einzelheiten werden anhand des in der Zeichnung dargestellten Ausführungsbeispiels näher erläutert.

Die einzige Figur zeigt eine Parksperre 10 für Kraftfahrzeuge, insbesondere für Kraftfahrzeuge, welche ein Automatikgetriebe, ein automatisiertes Getriebe oder einen Elektroantrieb aufweisen, umfassend eine Betätigungseinrichtung 12 mit einer Welle 14 zur Kopplung mit einem Aktuator 16, wobei die Welle 14 zwischen einer Betätigungsstellung und einer in der Figur dargestellten Lösestellung um eine Betätigungsachse A schwenkbar ist, eine mit der Betätigungseinrichtung 12 gekoppelte Riegeleinrichtung 18 mit einem Riegel 20, der zwischen einer Verriegelungsposition und einer in der Figur dargestellten Entriegelungsposition um die Betätigungsachse A schwenkbar ist, eine Sperrklinke 22, die zwischen einer in der Figur dargestellten Sperrstellung und einer Freigabestellung um eine Klinkenlagerachse B schwenkbar ist, sowie ein Parksperren-Zahnrad 24, das um eine Parksperrenachse C drehbar und mit einem Kraftfahrzeugrad drehfest gekoppelt ist.

In der Sperrstellung greift ein Sperrzahn 26 der Sperrklinke 22 so in das Parksperren-Zahnrad 24 ein, dass eine Drehung des Parksperren-Zahnrads 24 um die Parksperrenachse C blockiert ist. Hingegen ist der Sperrzahn 26 in der Freigabestellung der Sperrklinke 22 vom Parksperren-Zahnrad 24 beabstandet, sodass eine Drehung des Parksperren-Zahnrads 24 um die Parksperrenachse C freigegeben ist. Ferner ist im Bereich der Klinkenlagerachse B eine Schenkelfeder 28 vorgesehen, welche die Sperrklinke 22 in ihre Freigabestellung beaufschlagt.

Beim Verschwenken in ihre Betätigungsstellung beaufschlagt die Welle 14 der Betätigungseinrichtung 12 den Riegel 20 in seine Verriegelungsposition, wobei der Riegel 20 beim Verschwenken in seine Verriegelungsposition wiederum die Sperrklinke 22 entgegen der Federkraft der Schenkelfeder 28 in ihre Sperrstellung beaufschlagt. Der Riegel 20 ist dabei auf der Welle 14 begrenzt verschwenkbar gelagert, wobei zwischen der Welle 14 und dem Riegel 20 eine Schenkelfeder 30 angeordnet ist, welche den Riegel 20 relativ zur Welle 14 mit einer in Richtung zur Verriegelungsposition wirkenden Federkraft beaufschlagt.

In der Lösestellung der Welle 14 wird der Riegel 20 hingegen in seiner Entriegelungsposition gehalten, wobei die Sperrklinke 22 in dieser Entriegelungsposition freigegeben ist und sich infolge der Federbeaufschlagung durch die Schenkelfeder 28 in ihre Freigabestellung bewegt.

Da die in der Figur dargestellte Parksperre 10 hinsichtlich ihrer generellen Konstruktion sowie ihres allgemeinen Funktionsprinzips weitgehend mit der Parksperre gemäß DE 10 2010 027 826 A1 übereinstimmt, wird diesbezüglich explizit auf die Ausführungen in dieser Druckschrift verwiesen und im Folgenden lediglich auf Unterschiede und Vorteile der Parksperre 10 näher eingegangen.

Beispielsweise wirkt der Riegel 20 in seiner Verriegelungsposition so mit der Sperrklinke 22 zusammen, dass zwischen dem Riegel 20 und der Sperrklinke 22 eine Selbsthemmung vorliegt. Hierzu ist in der Sperrklinke 22 ein Hinterschnitt 32 ausgebildet, in den der Riegel 20 in seiner Verriegelungsposition eingreift. Dies bedeutet, dass der Riegel 20 bei seiner Bewegung von der Verriegelungsposition in die Entriegelungsposition die Sperrklinke 22 zunächst entgegen der Federkraft der Schenkelfeder 28 zum Parksperren-Zahnrad 24 hin verschwenkt, bevor er dann die Sperrklinke 22 freigibt, sodass sich diese federbeaufschlagt vom Parksperren-Zahnrad 24 weg in ihre Freigabestellung bewegt. Somit wird durch den Hinterschnitt 32 der Sperrklinke 22 auf einfache Art und Weise eine besonders hohe Haltekraft der aktivierten Parksperre 10 sichergestellt.

Das Parksperren-Zahnrad 24 weist in Umfangsrichtung abwechselnd Zähne 34 und Zahnlücken 36 auf, wobei in der Sperrstellung der Sperrklinke 22 der Sperrzahn 26 in eine der Zahnlücken 36 eingreift, um eine Rotation des Parksperren-Zahnrads 24 um die Parksperrenachse C zu blockieren. Die Parksperre 10 ist in diesem Fall aktiviert, wobei die drehfeste Kopplung zwischen einem Fahrzeugrad und dem blockierten Parksperren-Zahnrad 24 ein Wegrollen des Kraftfahrzeugs zuverlässig verhindert.

Gemäß der Figur weisen die Zähne 34 des Parksperren-Zahnrads 24 auf ihrer radialen Außenseite eine satteldachförmige Kopfkontur 38 auf. Somit umfasst die Kopfkontur 38 jedes Zahns 34 zwei aneinandergrenzende Schrägflächen 40, die einen Winkel α von 155° ≤ α ≤ 175°, insbesondere α = 165° einschließen.

Wird die Parksperre 10 in einem sogenannten "Missbrauchsfall" bei Fahrzeuggeschwindigkeiten oberhalb der Schrittgeschwindigkeit betätigt, so verhindert diese Kopfkontur 38 eine größere Beschädigung des Fahrzeuggetriebes und/oder der Parksperre 10. Aufgrund der Kopfkontur 38 wird die Sperrklinke 22 nämlich durch das mit dem Fahrzeugrad drehfest gekoppelte, rasch rotierende Parksperren-Zahnrad 24 besonders stoßarm abgewiesen und ein Eingriff des Sperrzahns 26 in die Zahnlücken 36 zuverlässig verhindert.

Um im Missbrauchsfall unerwünscht starke Schwingungen im Antriebsstrang des Kraftfahrzeugs zu verhindern, hat es sich darüber hinaus als vorteilhaft erwiesen, die Trägheitsmomente des Riegels 20 und der Sperrklinke 22 zu minimieren, wodurch sich im Missbrauchsfall auch die über das Parksperren-Zahnrad 24 in das Fahrzeuggetriebe eingeleitete Energie drastisch reduziert.

Im vorliegenden Fall weisen der Riegel 20 und die Sperrklinke 22 zur Reduktion des Trägheitsmoments Aussparungen 42 auf. Diese Aussparungen 42 können beispielsweise als Ausfräsungen, wie am Riegel 20 dargestellt, oder als Durchgangsbohrungen parallel zur Klinkenlagerachse B, wie an der Sperrklinke 22 dargestellt, ausgeführt sein.

Zur Montage des Aktuators 16 an der Betätigungseinrichtung 12 der Parksperre 10, ist ein axiales Ende 44 der Welle 14 als Vielzahn oder Vielkant ausgebildet. Solch eine formschlüssige und im Wesentlichen drehfeste Mehrzahn-bzw. Mehrkantverbindung ermöglicht mit geringem Aufwand eine vorteilhafte, positionsdefinierte Montage des Aktuators 16 an der Parksperre 10.

Gemäß der Figur ist außerdem eine Blattfeder 46 sowie ein drehfest mit der Welle 14 verbundenes Rastelement 48 vorgesehen, wobei die Blattfeder 46 und das Rastelement 48 sowohl in der Betätigungsstellung als auch in der Lösestellung der Welle 14 eine Rastverbindung ausbilden. Dabei hat die Blattfeder 46 ein Befestigungsende 50 zur karosseriefesten Montage der Blattfeder 46 und ein entgegengesetztes Rastende 52, welches durch einen Federabschnitt 54 der Blattfeder 46 gegen das Rastelement 48 beaufschlagt ist. Das Rastelement 48 weist eine der Betätigungsstellung zugeordnete Ausnehmung 56 sowie eine der Lösestellung zugeordnete Ausnehmung 58 auf, sodass das Rastende 52 der Blattfeder 46 in beiden Stellungen der Welle 14 in eine der Ausnehmungen 56, 58 eingreift und eine Rastverbindung ausbildet.

Angrenzend an das Befestigungsende 50 weist die Blattfeder 46 den im Wesentlichen ebenen Federabschnitt 54 auf, welcher am Rastende 52 der Blattfeder 46 zum Rastelement 48 hin umgebogen, insbesondere aufgerollt ist und einen Rastvorsprung 60 bildet.

Die Blattfeder 46 wirkt im vorliegenden Fall somit als Rastierfeder, deren Rastvorsprung 60 sowohl in der Betätigungsstellung als auch in der Lösestellung der Welle 14 in eine der Ausnehmungen 56, 58 schnappt, um die Welle 14 zu fixieren.

Gemäß der Figur ist das Rastelement 48 eine Rastplatte, welche sich senkrecht zur Betätigungsachse A erstreckt und als Ausnehmungen 56, 58 jeweils eine Einkerbung aufweist, in welche der Rastvorsprung 60 der Blattfeder 46 eingreifen kann.

Auf diese Weise lässt sich die Parksperre 10 unter besonders geringer Belastung des Aktuators 16 betätigen, was sich positiv auf dessen Lebensdauer und Energieverbrauch auswirkt. 46 und das Rastelement 48 sowohl in der Betätigungsstellung als auch in der Lösestellung der Welle 14 eine Rastverbindung ausbilden. Dabei hat die Blattfeder 46 ein Befestigungsende 50 zur karosseriefesten Montage der Blattfeder 46 und ein entgegengesetztes Rastende 52, welches durch einen Federabschnitt 54 der Blattfeder 46 gegen das Rastelement 48 beaufschlagt ist. Das Rastelement 48 weist eine der Betätigungsstellung zugeordnete Ausnehmung 56 sowie eine der Lösestellung zugeordnete Ausnehmung 58 auf, sodass das Rastende 52 der Blattfeder 46 in beiden Stellungen der Welle 14 in eine der Ausnehmungen 56, 58 eingreift und eine Rastverbindung ausbildet.

Angrenzend an das Befestigungsende 50 weist die Blattfeder 46 den im Wesentlichen ebenen Federabschnitt 54 auf, welcher am Rastende 52 der Blattfeder 46 zum Rastelement 48 hin umgebogen, insbesondere aufgerollt ist und einen Rastvorsprung 60 bildet.

Die Blattfeder 46 wirkt im vorliegenden Fall somit als Rastierfeder, deren Rastvorsprung 60 sowohl in der Betätigungsstellung als auch in der Lösestellung der Welle 14 in eine der Ausnehmungen 56, 58 schnappt, um die Welle 14 zu fixieren.

Gemäß der Figur ist das Rastelement 48 eine Rastplatte, welche sich senkrecht zur Betätigungsachse A erstreckt und als Ausnehmungen 56, 58 jeweils eine Einkerbung aufweist, in welche der Rastvorsprung 60 der Blattfeder 46 eingreifen kann.

Auf diese Weise lässt sich die Parksperre 10 unter besonders geringer Belastung des Aktuators 16 betätigen, was sich positiv auf dessen Lebensdauer und Energieverbrauch auswirkt.

## Patentansprüche

1. Parksperre für Kraftfahrzeuge, insbesondere für Kraftfahrzeuge, welche ein Automatikgetriebe, ein automatisiertes Getriebe oder einen Elektroantrieb aufweisen, umfassend
eine Betätigungseinrichtung (12) mit einer Welle (14) zur Kopplung mit einem Aktuator (16), wobei die Welle (14) zwischen einer Betätigungsstellung und einer Lösestellung um eine Betätigungsachse (A) schwenkbar ist,
eine mit der Betätigungseinrichtung (12) gekoppelte Riegeleinrichtung (18) mit einem Riegel (20), der zwischen einer Verriegelungsposition und einer Entriegelungsposition um die Betätigungsachse (A) schwenkbar ist,
eine Sperrklinke (22), die zwischen einer Sperrstellung und einer Freigabestellung um eine Klinkenlagerachse (B) schwenkbar ist, sowie
ein Parksperren-Zahnrad (24), das um eine Parksperrenachse (C) drehbar und mit einem Kraftfahrzeugrad gekoppelt ist,
wobei die Sperrklinke (22) in ihrer Sperrstellung so in das Parksperren-Zahnrad (24) eingreift, dass eine Drehung des Parksperren-Zahnrads (24) um die Parksperrenachse (C) blockiert ist, und in ihrer Freigabestellung vom Parksperren-Zahnrad (24) beabstandet ist, sodass eine Drehung des Parksperren-Zahnrads (24) um die Parksperrenachse (C) freigegeben ist,
wobei die Welle (14) der Betätigungseinrichtung (12) in ihrer Betätigungsstellung den Riegel (20) in seine Verriegelungsposition und dieser die Sperrklinke (22) in ihre Sperrstellung beaufschlagt, und
wobei der Riegel (20) in der Lösestellung der Welle (14) seine Entriegelungsposition einnimmt, in welcher die Sperrklinke (22) freigegeben ist, wobei der Riegel (20) und die Sperrklinke (22) in der Verriegelungsposition des Riegels (20) so zusammenwirken, dass zwischen dem Riegel (20) und der Sperrklinke (22) eine Selbsthemmung vorliegt, **dadurch gekennzeichnet, dass** die Sperrklinke (22) einen Hinterschnitt (32) aufweist, in welchen der Riegel (20) in seiner Verriegelungsposition eingreift.

2. Parksperre nach Anspruch 1, **gekennzeichnet durch** wenigstens eines der nachfolgenden Merkmale:
- ein axiales Ende (44) der Welle (14) ist zur formschlüssigen Verbindung mit dem Aktuator (16) als Vielzahn oder Vielkant ausgebildet;
- es ist eine Blattfeder (46) sowie ein drehfest mit der Welle (14) verbundenes Rastelement (48) vorgesehen, wobei die Blattfeder (46) und das Rastelement (48) sowohl in der Betätigungsstellung als auch in der Lösestellung der Welle (14) eine Rastverbindung ausbilden;
- das Parksperren-Zahnrad (24) hat in Umfangsrichtung abwechselnd Zähne (34) und Zahnlücken (36), wobei die Zähne (34) eine satteldachförmige Kopfkontur (38) aufweisen;
- der Riegel (20) und/oder die Sperrklinke (22) weisen zur Reduktion des Trägheitsmoments wenigstens eine Aussparung (42) auf;

3. Parksperre nach Anspruch 1 oder 2, **dadurch gekennzeichnet, dass** die Sperrklinke (22) in ihre Freigabestellung federbeaufschlagt ist.

4. Parksperre nach einem der vorhergehenden Ansprüche, **dadurch gekennzeichnet, dass** eine Blattfeder (46) sowie ein drehfest mit der Welle (14) verbundenes Rastelement (48) vorgesehen, wobei die Blattfeder (46) ein Befestigungsende (50) und ein gegen das Rastelement (48) beaufschlagtes, entgegengesetztes Rastende (52) aufweist, und wobei das Rastelement (48) eine der Lösestellung zugeordnete Ausnehmung (56) und eine der Betätigungsstellung zugeordnete Ausnehmung (58) aufweist, sodass das Rastende (52) der Blattfeder (46) sowohl in der Betätigungsstellung als auch in der Lösestellung der Welle (14) in eine der Ausnehmungen (56, 58) eingreift und eine Rastverbindung ausbildet.

5. Parksperre nach Anspruch 4, **dadurch gekennzeichnet, dass** die Blattfeder (46) einen im Wesentlichen ebenen Federabschnitt (54) aufweist, der am Rastende (52) der Blattfeder (46) zum Rastelement (48) hin umgebogen ist und einen Rastvorsprung (60) bildet.

6. Parksperre nach einem der vorhergehenden Ansprüche, **dadurch gekennzeichnet, dass** das Parksperren-Zahnrad (24) in Umfangsrichtung abwechselnd Zähne (34) und Zahnlücken (36) hat, wobei jeder Zahn (34) im Querschnitt des Parksperren-Zahnrads (24) eine satteldachförmige Kopfkontur (38) aufweist, mit zwei Schrägflächen (40), die einen Winkel (α) von 155° ≤ α ≤ 175°, insbesondere α ≈ 165° einschließen.

7. Parksperre nach einem der vorhergehenden Ansprüche, **dadurch gekennzeichnet, dass** der Riegel (20) und/oder die Sperrklinke (22) zur Reduktion des Trägheitsmoments wenigstens eine Aussparung (42) aufweisen, die als Durchgangsbohrung parallel zur Klinkenlagerachse (B) ausgeführt ist.

## Claims

1. A parking lock for motor vehicles, especially for motor vehicles which have an automatic transmission, an automated transmission or an electric drive, comprising
an actuating means (12) with a shaft (14) for coupling with an actuator (16), wherein the shaft (14) is pivotable about an actuation axis (A) between an actuation position and a disengaged position,
a catch means (18) coupled with the actuating means (12), with a catch (20) which is pivotable about the actuation axis (A) between a latching position and an unlatching position,
a pawl (22) which is pivotable about a pawl bearing axis (B) between a blocking position and a release position, and also
a parking lock gear wheel (24) which is rotatable about a parking lock axis (C) and is coupled with a motor vehicle wheel,
wherein the pawl (22) in its blocking position engages in the parking lock gear wheel (24) such that rotation of the parking lock gear wheel (24) about the parking lock axis (C) is blocked, and in its release position is spaced apart from the parking lock gear wheel (24), so that rotation of the parking lock gear wheel (24) about the parking lock axis (C) is released,
wherein the shaft (14) of the actuating means (12) in its actuation position urges the catch (20) into its latching position, and the latter urges the pawl (22) into its blocking position, and
wherein the catch (20) in the disengaged position of the shaft (14) assumes its unlatching position, in which the pawl (22) is released,
wherein the catch (20) and the pawl (22) cooperate in the latching position of the catch (20) such that self-locking occurs between the latch (20) and the pawl (22),
**characterised in that**
the pawl (22) has an undercut (32) in which the catch (20) engages in its latching position.

2. A parking lock according to Claim 1, **characterised by** at least one of the following features:
- an axial end (44) of the shaft (14) is designed as a multi-toothed or polygonal element for connecting in positive manner with the actuator (16);
- a leaf spring (46) and also a latching element (48) which is connected non-rotationally to the shaft (14) are provided, the leaf spring (46) and the latching element (48) forming a latching connection both in the actuation position and in the disengaged position of the shaft (14);
- the parking lock gear wheel (24) has teeth (34) and tooth spaces (36) alternately in the peripheral direction, the teeth (34) having a gable-roof-shaped tip contour (38);
- the catch (20) and/or the pawl (22) have at least one cutout (42) for reducing the moment of inertia.

3. A parking lock according to Claim 1 or Claim 2, **characterised in that** the pawl (22) is urged into its release position by a spring.

4. A parking lock according to one of the preceding claims, **characterised in that** a leaf spring (46) and also a latching element (48) which is connected non-rotationally to the shaft (14) are provided, the leaf spring (46) having a fastening end (50) and an opposing latching end (52) which is urged against the latching element (48), and the latching element (48) having a recess (56) associated with the disengaged position and a recess (58) associated with the actuation position, so that the latching end (52) of the leaf spring (46) engages in one of the recesses (56, 58) and forms a latching connection both in the actuation position and in the disengaged position of the shaft (14).

5. A parking lock according to Claim 4, **characterised in that** the leaf spring (46) has a substantially flat spring portion (54) which is bent over towards the latching element (48) at the latching end (52) of the leaf spring (46) and forms a latching projection (60).

6. A parking lock according to one of the preceding claims, **characterised in that** the parking lock gear wheel (24) has teeth (34) and tooth spaces (36) alternately in the peripheral direction, each tooth (34) in the cross-section of the parking lock gear wheel (24) having a gable-roof-shaped tip contour (38), with two inclined faces (40) which enclose an angle (α) of 155° ≤ α ≤ 175°, in especially α ≈ 165°.

7. A parking lock according to one of the preceding claims, **characterised in that** the catch (20) and/or the pawl (22) have at least one cutout (42) which is embodied as a through-bore parallel to the pawl bearing axis (B) for reducing the moment of inertia.

## Revendications

1. Système de blocage de stationnement destiné à des véhicules automobiles en particulier des véhicules automobiles équipés d'une boîte de vitesses automatique, d'une boîte de vitesses automatisée ou d'un système d'entraînement électrique comprenant :
un dispositif d'actionnement (12) comprenant un arbre (14) permettant son accouplement avec un actionneur (16), l'arbre (14) étant susceptible de pivoter autour d'un axe d'actionnement (A) entre une position d'actionnement et une position de desserrage,
un dispositif de verrouillage (18) couplé au dispositif d'actionnement (12) et comportant un verrou qui est susceptible de pivoter entre une position de verrouillage et une position de déverrouillage autour de l'axe d'actionnement (A),
un cliquet de blocage (22) qui est susceptible de pivoter entre une position de blocage et une position de libération autour d'un axe de montage du cliquet (B), et
un pignon de blocage de stationnement (24) qui est mobile en rotation autour d'un axe de blocage de stationnement (C) et est couplé à une roue du véhicule,
dans sa position de blocage le cliquet de blocage (22) venant en prise dans le pignon de blocage de stationnement de sorte qu'une rotation du pignon de blocage de stationnement (24) autour de l'axe de blocage de stationnement (C) soit bloquée, et dans sa position de libération le cliquet de blocage (22) étant situé à distance du pignon de blocage de stationnement (24) de sorte que la rotation du pignon de blocage de stationnement (24) autour de l'axe de blocage de stationnement (C) soit libérée,
dans sa position d'actionnement, l'arbre (14) du dispositif d'actionnement (12) rappelant le verrou (20) dans sa position de verrouillage, et ce verrou rappelant le cliquet de blocage (22) dans sa position de blocage, dans la position de desserrage de l'arbre (14) le verrou (20) prenant sa position de déverrouillage dans laquelle le cliquet de blocage (22) est libéré, et
dans la position de verrouillage du verrou (20) ce verrou (20) et le cliquet de serrage (22) coopérant de sorte qu'il y ait un arrêt automatique entre le verrou (20) et le cliquet de blocage (22),
**caractérisé en ce que**
le cliquet de serrage (22) comporte une contre-dépouille (32) dans laquelle le verrou (20) vient en prise dans sa position de verrouillage.

2. Système de blocage de stationnement conforme à la revendication 1, **caractérisé en ce qu'**
il comporte au moins l'une des caractéristiques suivantes :
- l'extrémité axiale (44) de l'arbre (14) est réalisée sous la forme d'une denture multiple ou d'un polyèdre pour permettre une liaison par la forme avec l'actionneur (16),
- il est prévu un ressort à lames (46) ainsi qu'un élément d'encliquetage (48) relié solidairement en rotation à l'arbre (14), le ressort à lames (46) et l'élément d'encliquetage (48) formant une liaison par encliquetage dans la position d'actionnement et également dans la position de desserrage de l'arbre (14),
- le pignon de blocage de stationnement (24) a un nombre alterné de dents (34) et d'intervalles entre les dents (36) dans sa direction périphérique, les dents (34) ayant un contour de tête (38) en forme de toit à deux pentes,
- le verrou (20) et/ou le cliquet de serrage (22) comportent au moins un évidement (42) pour diminuer le moment d'inertie.

3. Système de blocage de stationnement conforme à la revendication 1 ou 2,
**caractérisé en ce que**
le cliquet de blocage (22) est rappelé élastiquement vers sa position de libération.

4. Système de blocage de stationnement conforme à l'une des revendications précédentes,
**caractérisé en ce qu'**
il est prévu un ressort à lames (46) ainsi qu'un élément d'encliquetage (48) relié solidairement en rotation à l'arbre (14), le ressort à lames (46) comportant une extrémité de fixation (50) et une extrémité d'encliquetage opposée (52) rappelée contre l'élément d'encliquetage, et l'élément d'encliquetage (48) comportant un évidement (56) associé à la position de desserrage et un évidement (58) associé à la position d'actionnement de sorte que l'extrémité d'encliquetage (52) du ressort à lames (46) vienne en prise dans l'un des évidements (56, 58) dans la position d'actionnement et également dans la position de desserrage de l'arbre (14) et forme une liaison par encliquetage.

5. Système de blocage de stationnement conforme à la revendication 4, **caractérisé en ce que**
le ressort à lames (46) comprend un segment de ressort (54) essentiellement plan qui est courbé vers l'élément d'encliquetage (48) à l'extrémité d'encliquetage (52) de ce ressort à lames (46) et forme une saillie d'encliquetage (60).

6. Système de blocage de stationnement conforme à l'une des revendications précédentes,
**caractérisé en ce que**
le pignon de blocage de stationnement (24) a un nombre alterné de dents (34) et d'intervalles entre les dents (36) dans sa direction périphérique, et, dans la section du pignon de blocage de stationnement (24) chaque dent (34) a un contour de tête (38) en forme de toit à deux pentes ayant deux surfaces inclinées (40) qui définissent un angle (α) tel que 155°≤α≤175°, et en particulier égal à 165°.

7. Système de blocage de stationnement conforme à l'une des revendications précédentes,
**caractérisé en ce que**
pour permettre de réduire le moment d'inertie, le verrou (20) et/ou le cliquet de blocage (22) comporte(nt) au moins un évidement (42) qui est réalisé sous la forme d'un perçage traversant parallèle à l'axe de montage du cliquet (B).
